(19) Europäisches Patentamt / European Patent Office / Office européen des brevets

(11) **EP 4 708 706 A1**

(12) **EUROPEAN PATENT APPLICATION**

(43) Date of publication:
**11.03.2026 Bulletin 2026/11**

(21) Application number: **25195796.5**

(22) Date of filing: **13.08.2025**

(51) International Patent Classification (IPC):
**H04B 1/10** (2006.01)    **H04L 25/03** (2006.01)

(52) Cooperative Patent Classification (CPC):
**H04B 1/1027; H04L 25/03993**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.09.2024 KR 20240121657**

(71) Applicant: **Samsung Electronics Co., Ltd.**
**Suwon-si, Gyeonggi-do 16677 (KR)**

(72) Inventor: **PARK, Kwonyeol**
**Suwon-si (KR)**

(74) Representative: **Marks & Clerk LLP**
**15 Fetter Lane**
**London EC4A 1BW (GB)**

(54) **COMMUNICATION PROCESSOR AND OPERATING METHOD OF THE SAME**

(57)    Provided are a communication processor and an operating method of the communication processor. The communication processor includes: a signal processing circuitry configured to perform an interference whitening operation for a receive signal, and perform a symbol detection operation and a channel decoding operation for the receive signal to output bit data, a controller configured to control the signal processing circuitry and receive channel state information for the receive signal or interference estimation data input from the outside, and an anomaly detection module configured to perform an interference detection operation based on the receive signal to determine whether to perform the interference whitening operation.

## FIG. 2

EP 4 708 706 A1

**Description**

BACKGROUND OF THE INVENTION

(a) Field of the Invention

The present disclosure relates to a communication processor and an operating method of the same.

(b) Description of the Related Art

In general, improving a system performance in a wireless communication system is a very important issue, and as a result, various modes for enhancing the system performance have been proposed. One of the various modes proposed to enhance the system performance is a scheme of alleviating interference.

The mode of alleviating the interference is variously proposed, and one of them is an interference whitening mode. However, in an interference whitening operation, when an interference level is lower than a noise level, performance deterioration of signal reception is caused, so determining whether actual interference occurs is important in improving an interference whitening performance.

SUMMARY OF THE INVENTION

An example embodiment attempts to provide a communication processor and an operating method of the same, which generates information on occurrence of interference based on an actual data reception period.

An example embodiment attempts to provide a communication processor and an operating method the same, which improve an interference whitening performance.

An example embodiment of the present disclosure may provide a communication processor which includes: a signal processing circuitry configured to perform an interference whitening operation for a receive signal, and perform a symbol detection operation and a channel decoding operation for the receive signal to output bit data, a controller configured to control the signal processing circuitry and receive channel state information for the receive signal or interference estimation data input from an outside, and an anomaly detection module configured to perform an interference detection operation based on the receive signal to determine whether to perform the interference whitening operation.

Another example embodiment of the present disclosure may provide an operating method of a communication processor, which includes: performing an interference detection operation based on channel state information for a receive signal or interference estimation data input from an outside, performing pre-processing on the receive signal to generate sample data, in response to a result of the interference detection operation, generating a Z-score for the sample data to generate standard sample data, classifying the standard sample data based on a classification training engine, and determining whether to perform an interference whitening operation for the receive signal, in response to a result of the classifying.

Another example embodiment of the present disclosure may provide an operating method of a communication processor, which includes: performing an interference detection operation based on channel state information for a receive signal or interference estimation data input from an outside, selecting a training operation or a classify operation of a classification training engine in response to a result of the interference detection operation, performing pre-processing on the receive signal to generate sample data, after the selecting, generating a Z-score for the sample data to generate standard sample data, and performing the training operation or the classify operation for the standard sample data, based on the selecting.

Another example embodiment of the present disclosure may provide an operating method of a communication processor, which includes: performing an interference detection operation based on channel state information for a receive signal or interference estimation data input from an outside, performing pre-processing on the receive signal to generate sample data in response to a result of the interference detection operation, generating a Z-score for the sample data to generate standard sample data, and classifying the standard sample data for one class based on a classification training engine.

The following features may apply to any of the above described aspects.

Performing interference whitening may comprise performing a whitening operation with respect to the receive signal and a channel matrix corresponding to the receive signal. The receive signal may be a frequency domain signal. The whitening operation may be performed in dependence upon a whitening filter coefficient WF. The whitening operation may whiten colored noise in the receive signal. The interference whitening operation may generate a whitened receive signal $y_w$ and the whitened channel matrix $H_w$.

The symbol detection operation may be performed based on the whitened receive signal $y_w$ and the whitened channel matrix $H_w$. At least one detected symbol may be output as a result of the symbol detection operation.

The channel decoding operation may be performed on the at least one detected symbol to output the bit data.

The controller is configured to control the signal processing circuitry to perform operations, including the interference whitening. The controller may be configured to receive the channel state information for the receive signal from the signal processing circuitry. The controller may be configured to receive the interference estimation data input from an outside, i.e. a source external to the communication processor. The source external to the communication processor may be a further processor of the user equipment.

The controller is configured to, based on at least one of the channel state information or the interference estimation data input, perform a first interference detection operation, wherein the interference detection operation performed by the anomaly detection module is a second interference detection operation. The anomaly detection module may be configured to perform the second interference detection operation in response to the interference being detected by the first interference detection operation.

The anomaly detection module may be configured to, in response to interference being detected by the interference detection operation, output an enable signal to the signal processing circuitry, the signal processing circuitry being configured to perform the interference whitening operation in response to the enable signal.

In some embodiments, the communication processor further comprises a processing unit, wherein the anomaly detection module is configured to be executed by the processing unit. In this case, the anomaly detection module may be a software module that is provided in response to the execution of computer program instructions by the processing unit.

At least some of the above and other features of the invention are set out in the claims.

BRIEF DESCRIPTION OF THE DRAWINGS

FIG. 1 is a diagram illustrating an example in which an inter-cell interference phenomenon occurs in a wireless communication system according to an example embodiment.

FIG. 2 is a block diagram illustrating a user equipment according to an example embodiment.

FIG. 3 illustrates an example of a resource structure of a time domain and a frequency domain in the wireless communications system according to an example embodiment.

FIG. 4 is a block diagram illustrating a signal processing circuitry according to an example embodiment.

FIG. 5 is a block diagram illustrating an interference whitening unit according to an example embodiment.

FIG. 6 is a block diagram illustrating an anomaly detection module according to an example embodiment.

FIG. 7 is a flowchart illustrating an operating method of a communication processor according to an example embodiment.

FIG. 8 is a diagram for describing the operating method of a communication processor according to an example embodiment.

FIG. 9 is a flowchart illustrating an operating method of a communication processor according to an example embodiment.

FIGS. 10 to 13 are diagrams for describing the operating method of a communication processor according to an example embodiment.

FIG. 14 is a flowchart illustrating an operating method of a communication processor according to an example embodiment.

FIGS. 15 to 17 are diagrams for describing the operating method of a communication processor according to an example embodiment.

FIG. 18 is a block diagram illustrating a user equipment according to an example embodiment.

FIG. 19 is a block diagram illustrating an application processor according to an example embodiment.

DETAILED DESCRIPTION OF THE EMBODIMENTS

The present disclosure will be described more fully hereinafter with reference to the accompanying drawings, in which various example embodiments of the present disclosure are shown. The present disclosure may be implemented in various different forms and is not limited to the example embodiments described herein.

A part irrelevant to the description will be omitted to clearly describe the present invention, and the same elements will be designated by the same reference numerals throughout the specification.

In addition, unless explicitly described to the contrary, the word "comprise", and variations such as "comprises" or "comprising", will be understood to imply the inclusion of stated elements but not the exclusion of any other elements.

In addition, even if a certain number described in the claim is explicitly cited within the claim, it should not be understood that there is no limited number of specific numbers in claims without such citation. For example, for help understanding, a phase 'at least one' and 'one or more' may be included in a subsequent dependent claim. However, the use of such a phrase should not be understood as a limitation described by an unclear 'one' for one example.

In addition, if customs such as 'at least one in A, B, or C' are used, this phrase will be well understood in those who are familiar with this technical field (that is, 'a system including at least one of A, B, or C' includes the meaning of A alone, B alone, C alone, A and B, A and C, B and C, and/or A, B, and C together, but is not limited to any one concept). Alternatively, it should be taken into account that there is a possibility that in a detailed description, claims, or drawings, a letter and/or phrase with two or more separate selectable terms will include one or any one of two, both two terms. For example, the phrase 'A or B' should be understood to include the possibility of 'A', or 'B' or 'A and B'.

As is traditional in the field of the disclosed technology, features and embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the scope of the inventive concepts. Further, the blocks, units and/or modules of the embodiments may be physically combined into more complex blocks, units and/or modules without departing from the scope of the inventive concepts.

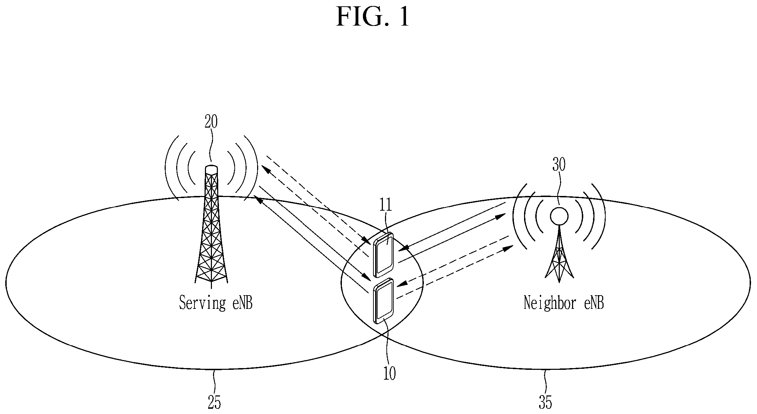

FIG. 1 is a diagram illustrating an example in which an inter-cell interference phenomenon occurs in a wireless communication system according to an example embodiment.

Referring to FIG. 1, a user equipment 10 according to an example embodiment may be included in a new radio (NR) network based wireless communication system through base stations 20 and 30, and may be described particularly based on 3GPP release. For example, each of the base stations 20 and 30 may be an evolved NodeB (eNB). The technical idea of the present disclosure is not limited to an NR network, and the technical idea of the present disclosure may also be applied to other wireless communication systems (e.g., long term evolution (LTE), LTE-advanced (LTE-A), wireless broadband (WiBro), and global system for mobile communication (GSM)) having a similar technical background or channel setting, a cellular communication system such as a next-generation communication such as 6G, etc., or short-range communication systems such as Bluetooth, near field communication (NFC), and wireless local area network (WLAN).

The user equipment 10 and an adjacent device 11 reuse a frequency band in order to maximize a communication capacity and increase efficiency within a limited frequency band. Each device 10, 11 may communicate with a different base station for sending uplink data and receiving downlink data. For example, device 10 may communicate with base station 20 for sending uplink data and receiving downlink data, whilst device 11 may communicate with base station 30 for sending uplink data and receiving downlink data. In such an environment, there are regions where cell coverages 25 and 35 overlap between the base stations 20 and 30, and as a result, an inter-cell interference (ICI) phenomenon may occur. The user equipment 10 is difficult to completely remove inter-cell interference without detailed information for a neighboring cell coverage 35 which causes interference, and the user equipment 10 whitens the inter-cell interference which occurs due to coloring in a specific frequency, thereby efficiently improving a quality of a signal.

In detail, the user equipment 10 is optimized to filter additive white Gaussian noise (AWGN) except for a signal transmitted from a serving base station 20. In this case, when the user equipment 10 is located at the region where the cell coverage 25 of the serving base station 20 and the neighboring cell coverage 35 of the neighboring base station 30 overlap, signals have a correlation between antennas, so the inter-cell interference phenomenon in which noise in a specific frequency band is colored may occur. In particular, when the user equipment 10 is located near an adjacent device 11 which transmits and receives a signal from the neighboring base station 30, the inter-cell interference phenomenon may strongly occur.

The user equipment 10 performs a maximum likelihood (hereinafter, referred to as ML) detection operation to perform a communication operation with an optimal performance when a noise variance is accurately measured while noise has a white feature. The user equipment 10 may obtain a performance gain by whitening the colored noise through interference whitening in an interference situation with the inter-cell interference. The user equipment 10 exemplarily measures a statistical feature between the antennas of the interference signal, and inversely compensates the measured statistical feature to acquire white noise from which coloring is removed.

In general, since the statistical feature between the antennas is measured based on a limited reference signal such as a demodulation reference signal (hereinafter, referred to as DMRS signal), the statistical feature may be inaccurately measured due to a random feature of noise in an environment in which a quality of a sample deteriorates such as an environment in which noise is superior to interference, which causes performance deterioration.

The user equipment 10 detects an effective interference situation such as a situation in which the interference is superior to the noise as a data transmission unit, and adaptively turns on or turns off the interference whitening operation to improve the performance of the communication operation.

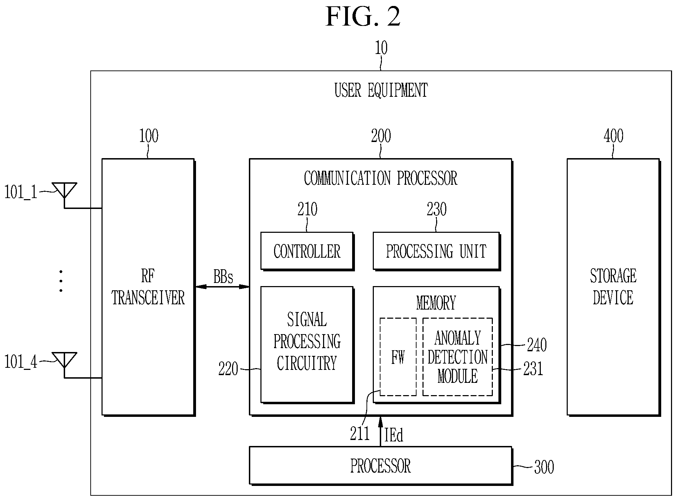

FIG. 2 is a block diagram illustrating a user equipment according to an example embodiment.

Referring to FIG. 2, the user equipment 10 may include an RF transceiver 100, a communication processor 200, a processor 300, and a storage device 400.

The user equipment 10 may be referred to as a terminal, a terminal equipment, a mobile station (MS), a mobile terminal (MT), a user terminal (UT), a subscribe station (SS), a wireless communication device, a wireless device, a device, a handheld device, etc. The user equipment 10 may be any device which communicate with the base stations 20 and 30 of FIG. 1 to transmit and receive data and/or control information.

The RF transceiver 100 receives, from a plurality of antennas 101_1 to 101_4, an RF signal transmitted by the base station. The RF transceiver 100 down-transforms the received RF signal to generate an intermediate frequency (hereinafter, referred to as IF) or a baseband signal BBs. The baseband signal BBs may be provided to the communication processor 200. Further, the RF transceiver 100 receives the baseband signal BBs output from the communication processor 200, and up-converts the baseband signal BBs into the RF signal and transmits the up-converted RF signal through the plurality of antennas 101_1 to 101_4.

According to an example embodiment, the plurality of antennas 101_1 to 101_4 may be horizontally arranged. The plurality of antennas 101_1 to 101_4, i.e., four antennas are illustrated, but the corresponding number is just one example, and does not limit the technical idea of the present disclosure. According to an example embodiment, a MIMO system and beamforming technologies may be applied to the plurality of antennas 101_1 to 101_4.

The communication processor 200 may process a signal to be transmitted or a receive signal according to a communication mode such as orthogonal frequency division multiplexing (OFDM), orthogonal frequency division multiple access (OFDMA), wideband code multiple access (WCDMA), high speed packet access+ (HSPA+), etc. Besides, the communication processor 200 may process the baseband signal BBs according to various type of communication modes (that is, various communication modes to which a technology which modulates or demodulates an amplitude and/or a frequency of the baseband signal BBs is applied). According to an example embodiment, the communication processor 200 may be referred to as a modem.

The communication processor 200 may include a controller 210, a signal processing circuitry 220, a processing unit 230, and a memory 240. The controller 210 may control an overall operation of the communication processor 200 for communication with the base station, and accesses the memory 240 to execute a loaded firmware 211 or operating system. In particular, the controller 210 may control operations such as interference whitening, filtering, decoding and/or encoding, analog conversion and/or digitization, and multiplexing and/or demultiplexing of the signal processing circuitry 220.

The controller 210 may select an operation of the anomaly detection module 231 to be described later by determining whether interference is detected. The controller 210 may then receive a result of an interference detection operation of the anomaly detection module 231. According to an example embodiment, the controller 210 may receive information on a channel state information reference signal (hereinafter referred to as a CSI-RS signal) or channel state information interference measurement (hereinafter, referred to as CSI-IM), and primarily detect interference based thereon. The information on CSI-RS or the CSI-IM may be received from the signal processing circuitry 220.

The signal processing circuitry 220 performs digitization, channel estimation, interference whitening, demodulation, and decoding for an analog signal to reconstruct an input data stream, and further, performs encoding, multiplexing and demodulating for digital data to generate a transmission signal.

According to an example embodiment, the signal processing circuitry 220 de-maps the receive signal based on an allocated resource element to measure information on the CSI-RS signal or CSI-IM. The signal processing circuitry 220 measures reference signal received power (hereinafter, referred to as RSRP) information for the CSI-RS signal, and measures power of the receive signal from the resource element allocated to the CSI-IM to generate the CSI-IM information. The measured information as channel state information may be provided to the controller 210.

According to an example embodiment, the information on the CSI-RS signal or CSI-IM may be measured at a period of 4 ms, 8 ms, 640 ms, etc., but is not limited thereto, and may be measured at a longer period than a slot which is a data transmission period.

According to an example embodiment, the signal processing circuitry 220 may provide a DMRS signal received at the same symbol interval to the anomaly detection module 231 to be described later. According to an example embodiment, information on the received DMRS signal may be provided to the anomaly detection module 231 through the controller 210. According to an example embodiment, an interference whitening operation of the signal processing circuitry 220 may be adaptively turned on or turned off based on the DMRS signal received at the same symbol interval.

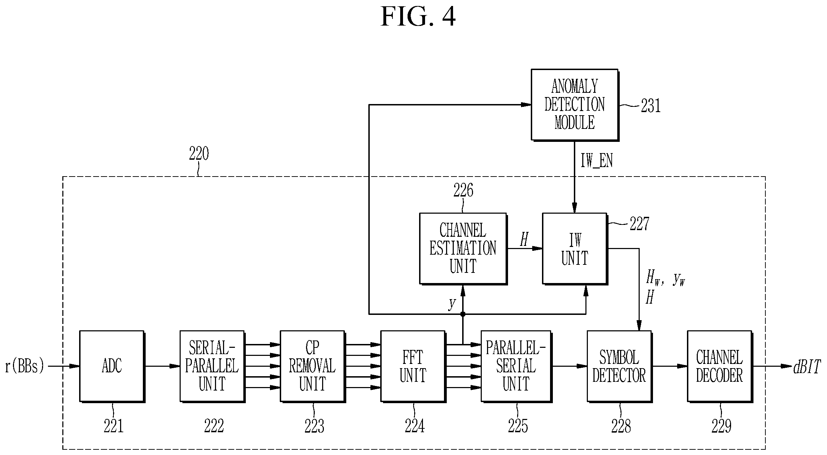

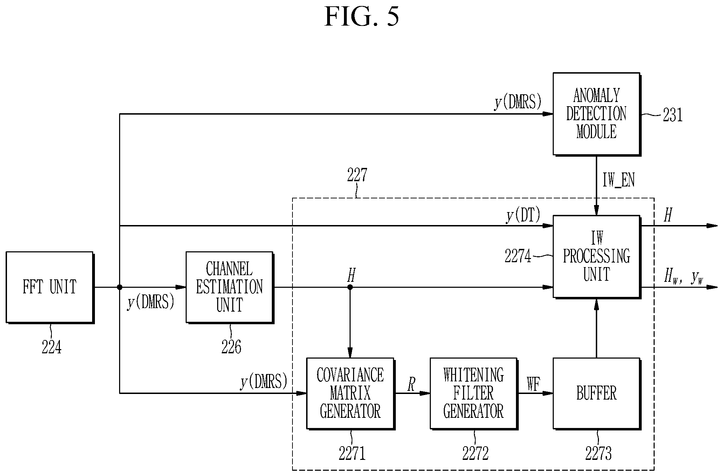

Thereafter, components of the signal processing circuitry 220 will be described based on a downlink in describing FIGS. 4 and 5.

In the drawing, the controller 210 and the signal processing circuitry 220 are illustrated as separated components, but the technical idea of the present disclosure is not limited thereto, and according to an example embodiment, the controller 210 and the signal processing circuitry 220 may be implemented as one component or the controller 210 may be implemented as one functional block of the signal processing circuitry 220.

The processing unit 230 accesses the memory 240 to execute the loaded anomaly detection module 231. The communication processor 200 may perform training and inference operations for a neural network or an algorithm as an on-device through placement of the processing unit 230. The processing unit 230 may include at least one of a neural network processing unit (NPU), a graphic processing unit (GPU), a central processing unit (CPU), a video processing unit (VPU), and a display processing unit (DPU). In particular, according to an example embodiment, when the processing unit 230 includes the NPU, the processing unit 230 may be specialized for an operation of the neural network and process input information in parallel.

According to an example embodiment, the processing unit 230 may perform an operation of training the neural network or the algorithm of the anomaly detection module 231, and perform the inference operation based on the trained neural network or algorithm of the anomaly detection module 231. According to an example embodiment, the anomaly detection module 231 may perform an unsupervised training operation by a one class classification mode, and perform a classify operation (also referred to as a classification operation) by detecting an anomaly. The anomaly detection module 231 may be operated based on at least one of deep support vector data description (SVDD), one class-support vector machine (OC-SVM), and K nearest neighbor (KNN).

According to an example embodiment, the processing unit 230 may generate sample data by performing an operation for a pre-processing operation for input information regardless of the operation of the anomaly detection module 231. According to an example embodiment, the processing unit 230 may generate standard sample data by performing an operation of generating a Z-score for elements for the sample data.

According to an example embodiment, the processing unit 230 may perform an operation of training the neural network or the algorithm of the anomaly detection module 231 based on the standard sample data, and derive a feature through the training. According to an example embodiment, the processing unit 230 may derive features of the standard sample data based on the pretrained neural network or algorithm of the anomaly detection module 231, and may perform an operation of classifying whether the standard sample data corresponds to a normal sample or an anomaly sample.

The memory 240 as a working memory may store data according to control instruction codes and operations of the firmware 211 and the anomaly detection module 231. The memory 240 has divided areas to separately store the data according to the control instruction codes and the operations of the firmware 211 and the anomaly detection module 231. The memory 240 may be implemented as a volatile memory such as DRAM, SRAM, or SDRAM, or a non-volatile memory such as PRAM, MRAM, ReRAM, FeRAM, or NAND flash. The memory 240 may also be implemented as a memory card (e.g., MMC, eMMC, SD, or micro SD). The memory 240 may include a compression buffer.

The processor 300 may be implemented as an application processor (AP) that controls an overall operation of the user equipment 10, and drives an application program, an operating system, etc. The processor 300 may transmit and receive a data stream to and from the communication processor 200, and process data. In the drawing, the processor 300 and the communication processor 200 are illustrated as separate separated components, but according to an example embodiment, the processor 300 and the communication processor 200 may be packaged as system on-chip (SoC).

The processor 300 may provide interference estimation data IEd to the communication processor 200. According to an example embodiment, the interference estimation data IEd may include interference data generated in an application layer or location data generated based on a global navigation satellite system (hereinafter, referred to as GNSS).

The storage device 400 may be implemented as a non-volatile memory device such as a NAND flash, a resistance memory, etc., and for example, the storage device 400 may be provided as a memory card (MMC, eMMC, SD, micro SD), etc. The storage device 400 may store data provided from the processor 300. Further, the storage device 400 may store the application program, the operating system, the firmware 211, and the anomaly detection module 231 of an electronic apparatus 2000.

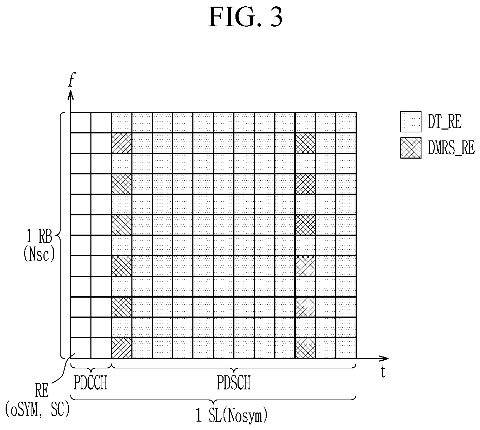

FIG. 3 illustrates an example of a resource structure of a time domain and a frequency domain in the wireless communications system according to an example embodiment. Specifically, FIG. 3 illustrates a basic structure of a time-frequency domain which is radio resource region in which a physical downlink control channel (PDCCH), which is a control channel, and a physical downlink shared channel (PDSCH), which is a data channel, are transmitted in downlink.

Referring to FIG. 3, a horizontal axis represents the time domain (t), and a vertical axis represents the frequency domain (f). According to an example embodiment, a minimum transmission unit in the time domain is an OFDM symbol oSYM. One slot SL may include Nosym consecutive OFDM symbols oSYM. For example, the number of OFDM symbols oSYM of one slot SL may be 14.

According to an example embodiment, the minimum transmission unit in the frequency domain is a subcarrier SC. A carrier bandwidth of one resource block RB may include Nsc consecutive subcarriers SC.

A basic unit of a resource in a time-frequency domain as a resource element RE may be represented as an index of the OFDM symbol oSYM and an index of the subcarrier SC. A resource block RB may include a plurality of resource elements REs. In an LTE system, the resource block RB may be defined as Nosym consecutive OFDM symbol (oSYM) indexes in the time domain and Nsc consecutive subcarrier (SC) indexes in the frequency domain. In an NR system, the resource block RB may be defined as one OFDM symbol (oSYM) index in the time domain and Nsc consecutive subcarrier (SC) indexes in the frequency domain. In general, a minimum transmission unit of data is the resource block RB, and for example, the number of subcarriers SC in one resource block RB is 12.

When FIG. 3 is described as an example, the physical downlink shared channel PDSCH and the physical downlink control channel PDCCH may be allocated based on one slot SL in the downlink.

In general, a downlink data signal may mean received signals mapped to a data resource element DT_RE of the physical downlink shared channel PDSCH, and transmitted. In the present disclosure, the DMRS signal may mean received signals mapped to a DMRS resource element DMRS_RE, and transmitted for estimation of the physical downlink shared channel PDSCH and demodulation for data.

For example, the physical downlink control channel PDCCH in one slot SL may include 12 DMRS resource elements DMRS_REs. In the LTE system, 12 DMRS signals in the resource block RB may be used for determining a covariance matrix for the channel estimation and interference whitening operations. In the NR system, 6 DMRS signals in the resource block RB may be used for determining the covariance matrix for the channel estimation and interference whitening operations.

Further, 6 among 12 DMRS resource elements DMRS_RE in one slot SL may be located in the index of the same OFDM symbol oSYM. At least one DMRS signal having the index of the same OFDM symbol oSYM may be provided to the anomaly detection module 231 as one sample.

In general, a downlink control signal may mean received signals transmitted through the physical downlink control channel PDDCH. The downlink control signal may include downlink control information (hereinafter, referred to as DCI). The DCI may include parameter information for generating a scrambling sequence for the DMRS signal.

Although not illustrated in FIG. 3, other types of channels may be allocated except for the physical downlink control channel PDCCH and the physical downlink shared channel PDSCH in the downlink, and other types of signals may be mapped to some resource elements. According to an example embodiment, a CSI-RS signal or a signal for CSI-IM may be mapped to the resource element, and received at a plurality of slot periods in the downlink.

FIG. 4 is a block diagram illustrating a signal processing circuitry according to an example embodiment. FIG. 5 is a block diagram illustrating an interference whitening unit according to an example embodiment. Specifically, FIG. 4 illustrates operation components of the signal processing circuitry 220 in the downlink.

Referring to FIGS. 2, 4, and 5, the signal processing circuitry 220 may include an analog-to-digital converter (ADC) 221, a serial to parallel unit 222, a cyclic prefix (CP) removal unit 223, a fast Fourier transform (FFT) unit 224, a parallel to serial unit 225, a channel estimation unit 226, an interference whitening (IW) unit 227, a symbol detector 228, and a channel decoder 229.

The ADC 221 may receive an analog receive signal r which is the baseband signal BBs, and convert the received analog receive signal into a digital signal. The serial to parallel unit 222 may convert a digital signal which is a serial time domain signal into a parallel time domain signal. The cyclic prefix removal unit 223 may remove a cyclic prefix for each symbol. According to an example embodiment, the serial to parallel unit 222 and the cyclic prefix removal unit 223 may perform a reception operation in the order of the cyclic prefix removal unit 223 and the serial to parallel unit 222.

The fast Fourier transform unit 224 performs an FFT algorithm to generate a parallel frequency domain signal based on the parallel time domain signal. The parallel to serial unit 225 may convert a parallel frequency domain digital signal into a serial frequency domain digital signal, and provide the serial frequency domain digital signal to the symbol detector 228.

A receive signal y which is the parallel frequency domain signal may be output from the fast Fourier transform unit 224, and be provided to the channel estimation unit 226, the interference whitening unit 227, and the anomaly detection module 231. According to an example embodiment, the fast Fourier transform unit 224 may provide the receive signal y to the anomaly detection module 231 through the controller 210.

The channel estimation unit 226 performs the channel estimation based on the receive signal y to generate a channel matrix H. According to an example embodiment, the channel estimation unit 226 may perform the channel estimation based on the DMRS signal mapped to the DMRS resource element DMRS_RE, and received among the receive signals y. The estimated channel matrix H may be provided to the interference whitening unit 227.

The interference whitening unit 227 receives the receive signal y and the channel matrix H, and measures a statistical feature between antennas of interference signals based thereon, and inversely compensates the measured statistical feature to perform the interference whitening operation of alleviating a correlation feature between the antennas. That is, the interference whitening unit 227 may generate a whitening receive signal $y_w$ and a whitening channel matrix $H_w$ from which coloring is removed, and including only the whitened interference signal and noise. According to an example embodiment, the interference whitening unit 227 may perform the interference whitening operation by using a minimum mean square error (MMSE) (hereinafter, referred to as MMSE) mode.

According to an example embodiment, the interference whitening unit 227 may adaptively turn on or turn off the interference whitening operation for the receive signal y and the channel matrix H based on interference whitening enable data IW_EN provided from the anomaly detection module 231. For example, the interference whitening unit 227 may perform the interference whitening operation for the receive signal y and the channel matrix H in response to receiving the interference whitening enable data IW_EN. According to an example embodiment, the interference whitening unit 227 may not perform the interference whitening operation for the receive signal y and the channel matrix H, and output the channel matrix H as it is, in response to not receiving the interference whitening enable data IW_EN.

The interference whitening unit 227 may include a covariance matrix generator 2271, a whitening filter generator 2272, a whitening filter buffer 2273, and an interference whitening processing unit 2274.

The covariance matrix generator 2271 may receive the DMRS signal among the receive signals y from the fast Fourier transform unit 224, receive the channel matrix H from the channel estimation unit 226, and generate a sample covariance matrix R. The covariance matrix generator 2271 obtains a mean of the covariance matrix based on the DMRS signal and the channel matrix H as in Equation 1 below to generate the sample covariance matrix R.

(Equation 1)

$$R = \frac{1}{N} \sum_{n=0}^{N-1} v_n v_n^H, \quad v_n = y_{k,f} - H_{k,f} x_{k,f}$$

Here, R may represent the sample covariance matrix, $v_n$ may be acquired from an n-th DMRS signal, $v_n^H$ may represent a Hermitian transpose of $v_n$, $y_{k,f}$ may represent a receive signal mapped to a DMRS resource element occupied by an OFDM symbol index k and a subcarrier index f, and received, $H_{k,f}$ may represent a channel matrix in the DMRS resource element occupied by the OFDM symbol index k and the subcarrier index f, and $x_{k,f}$ may represent a transmission signal which is previously known before receiving the DMRS signal.

The whitening filter generator 2272 may receive the sample covariance matrix R from the covariance matrix generator 2271, and generate a whitening filter coefficient WF based thereon, and provide the generated whitening filter coefficient WF to the whitening filter buffer 2273. The whitening filter generator 2272 may generate the whitening filter coefficient WF based on the sample covariance matrix R as in Equation 2 below.

(Equation 2)

$$R = LL^H, WF = L^{-1}$$

Here, R may represent the sample covariance matrix, $L$ may represent a lower triangular matrix of a Cholesky decomposition, $L^H$ may represent the Hermitian transpose of $L$, and $WF$ may represent the whitening filter coefficient.

The whitening filter buffer 2273 may buffer the whitening filter coefficient WF, and then output the buffered whitening filter coefficient WF to the interference whitening processing unit 2274.

The interference whitening processing unit 2274 may receive the receive signal y, the channel matrix H, and the whitening filter coefficient WF, and perform the interference whitening operation of performing inverse compensation based on the receive signal y, the channel matrix H, and the whitening filter coefficient WF, and generate a whitening receive signal $y_w$ and a whitening channel matrix $H_w$. According to an example embodiment, the interference whitening processing unit 2274 may perform the interference whitening operation for a data signal among the receive signals y.

According to an example embodiment, the interference whitening processing unit 2274 may adaptively turn on or turn off the interference whitening operation for the receive signal y and the channel matrix H based on interference whitening enable data IW_EN provided from the anomaly detection module 231. For example, the interference whitening processing unit 2274 may perform the interference whitening operation for the receive signal y and the channel matrix H in response to receiving the interference whitening enable data IW_EN. According to an example embodiment, the interference whitening unit 227 may not perform the interference whitening operation for the receive signal y and the channel matrix H, and output the channel matrix H as it is, in response to not receiving the interference whitening enable data IW_EN.

The symbol detector 228 may receive the receive signal y from the parallel to serial unit 225 and the channel matrix H from the interference whitening unit 227, or receive the whitening receive signal $y_w$ and the whitening channel matrix $H_w$ from the interference whitening processing unit 2274. The symbol detector 228 may perform a symbol detection operation based on the receive signal y and the channel matrix H, or the whitening receive signal $y_w$ and the whitening channel matrix $H_w$.

The channel decoder 229 may generate bit data dBIT by performing a decoding operation based on the detected symbol. According to an example embodiment, the channel decoder 229 supports a low density parity check (LDPC) code for transmission of large-capacity data, a polar code for high-reliability transmission of control information, L2 pre-processing, and a new channel coding mode such as network slicing for providing a dedicated network specialized to a specific service.

In FIGS. 4 and 5, it is illustrated that respective components are implemented as separate units, but at least two components of the analog-to-digital converter (ADC) 221, the serial to parallel unit 222, the cyclic prefix removal unit 223, the fast Fourier transform (FFT) unit 224, the parallel to serial unit 225, the channel estimation unit 226, the interference whitening unit 227, the symbol detector 228, and the channel decoder 229 of the signal processing circuitry 220 may be implemented to be integrated into one unit.

The respective components in FIGS. 4 and 5 may be implemented by using only hardware or by using a combination of hardware and software/firmware. As a specific example, at least some of the components in FIGS. 4 and 5 may be implemented as software, but other components may be implemented by configurable hardware or a mixture of software and configurable hardware. For example, the fast Fourier transform unit 224 may be implemented as a configurable software algorithm, and here, the implementation may be modified according to a size.

Further, in FIGS. 4 and 5, the components of the signal processing circuitry 220 are described based on the downlink, but the signal processing circuitry 220 may further include components including an encoder, a modulator, an inverse fast Fourier transform unit, etc., based on the uplink.

FIGS. 2, 3, and 6 are block diagrams illustrating an anomaly detection module according to an example embodiment.

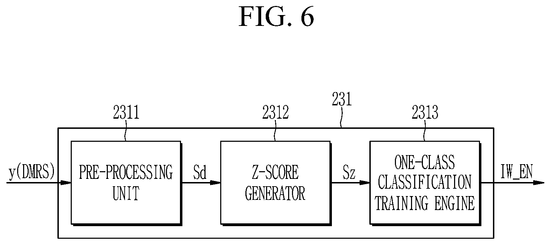

Referring to FIG. 6, the anomaly detection module 231 may perform a training operation or detect interference based on the receive signal y according to whether the controller 210 detects the interference. In the present disclosure, an interference detection operation of the anomaly detection module 231 may be an operation similar to an anomaly detection operation or a classification operation. According to an example embodiment, the anomaly detection module 231 may receive at least one DMRS signal received at the same symbol interval among the receive signals y as one sample. The at least one DMRS signal comprises one or more DMRS resource elements received at a same symbol interval in a resource block.

If the controller 210 does not detect the interference, the anomaly detection module 231 may perform an unsupervised training operation based on the DMRS signal, and classify whether the inference occurs for one class based on the received DMRS signal.

If the controller 210 detects the interference, the anomaly detection module 231 may classify whether the interference occurs as normal or the anomaly based on the DMRS signal to detect the interference.

The anomaly detection module 231 may include a pre-processing unit 2311, a Z-score generator 2312, a one-class classification training engine 2313, etc.

The pre-processing unit 2311 may transform at least one DMRS signal into one sample data Sd and pre-process the sample data Sd regardless of the operation of the anomaly detection module 231. According to an example embodiment, the sample data Sd may have the same dimension as an input layer of the one-class classification training engine 2313.

The sample data Sd may include a plurality of information, and according to an example embodiment, each element of the sample data Sd may include a power magnitude, an angle of arrival, an angle of departure, a Doppler element, phase noise, etc., according to the antenna, but is not limited thereto.

The Z-score generator 2312 generates a Z-score of each element of the sample data Sd based on the plurality of sample data Sd to generate standard sample data Sz. According to an example embodiment, the Z-score generator 2312 may generate the Z-score by performing standard normal distribution for each element of the sample data Sd, and generate the standard sample data Sz based on the generated Z-score. According to an example embodiment, the dimension of the sample data Sd may be the same as the dimension of the standard sample data Sz.

The anomaly detection module 231 may perform the training operation and the interference detection operation based on the standard sample data Sz representing a relative location of each element other than an absolute size of the sample data Sd through the Z-score generator 2312. The Z-score generator 2312 may improve efficiency of interference detection of the anomaly detection module 231.

The one-class classification training engine 2313 may perform the training operation or perform the interference detection operation for the standard sample data Sz according to whether the controller 210 detects the interference.

The one-class classification training engine 2313 may be a training model based on a neural network or an algorithm, and may operate based on any one of Deep SVDD, OC-SVM, and KNN. According to an example embodiment, the one-class classification training engine 2313 may map the standard sample data Sz to another dimension of data. That is, the one-class classification training engine 2313 may transform the standard sample data Sz from an input space to a feature space, and map the feature space. For example, the one-class classification training engine 2313 may map the standard sample data Sz to low dimension of data based on Deep SVDD. For example, the one-class classification training engine 2313 may map the standard sample data Sz to high dimension of data based on OC-SVM. However, the technical idea of the present disclosure is not limited to the example of the operation, and the one-class classification training engine 2313 may not perform mapping in the training operation.

The one-class classification training engine 2313 may classify the standard sample data Sz for one class as the controller 210 does not detect the interference. According to an example embodiment, the one-class classification training engine 2313 may normally classify the standard sample data Sz for one class to perform unsupervised learning as the controller 210 does not detect the interference.

According to an example embodiment, the one-class classification training engine 2313 may generate hypersphere or hyperplane which classifies data corresponding to the standard sample data Sz for one class in the training operation, and optimize a size of the hypersphere or a location of the hyperplane. The present disclosure is not limited thereto.

The one-class classification training engine 2313 may classify the standard sample data Sz into the normal or the anomaly based on a training model pretrained according to the detection of the interference of the controller 210. When the one-class classification training engine 2313 classifies the standard sample data Sz into the normal, the one-class classification training engine 2313 may determine that the interference is not detected, and when the one-class classification training engine 2313 classifies the standard sample data Sz into the anomaly, the one-class classification training engine 2313 may determine that the interference is detected.

For example, the one-class classification training engine 2313 may determine that the interference is not detected when the data corresponding to the standard sample data Sz is included in the trained hypersphere of Deep SVDD.

Further, the one-class classification training engine 2313 may determine that the interference is detected when the data corresponding to the standard sample data Sz is not included in the trained hypersphere of Deep SVDD.

When the one-class classification training engine 2313 determines that the interference is detected, the one-class classification training engine 2313 may output the interference whitening enable data IW_EN. According to an example embodiment, the interference whitening enable data IW_EN may be provided to the signal processing circuitry 220 through the controller 210.

The anomaly detection module 231 may detect an effective interference situation based on the sample data Sd corresponding to the data transmission unit through the interference detection operation of the one-class classification training engine 2313. The anomaly detection module 231 may improve the communication performance by adaptively turning on or turning off the interference whitening operation of the signal processing circuitry 220 through the one-class classification training engine 2313.

Further, the anomaly detection module 231 may perform the training operation and the classify operation by control of the controller 210 in the form of an on-device within the communication processor 200, and improve the communication performance by improving an optimization operation of the one-class classification training engine 2313 through a continuous training operation after shipping.

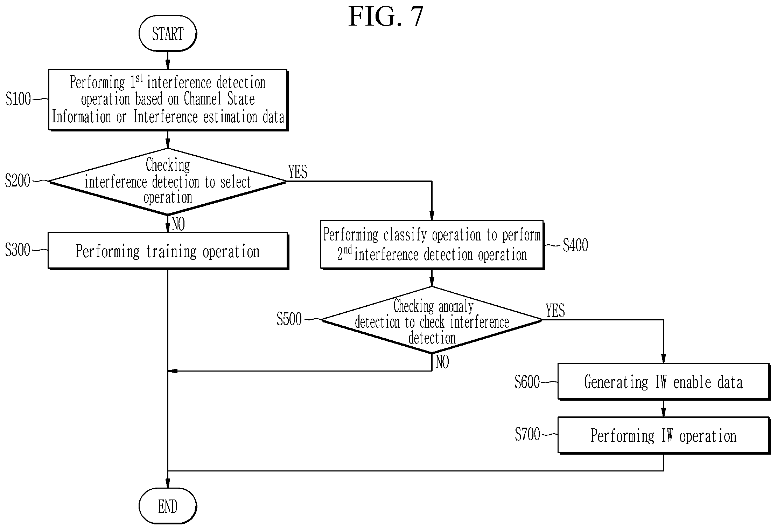

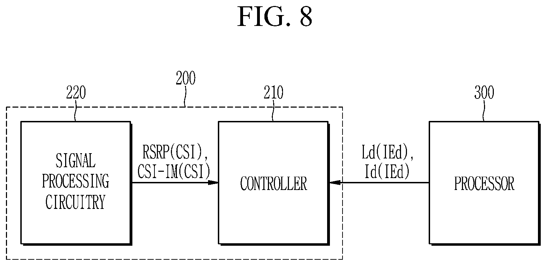

FIG. 7 is a flowchart illustrating an operating method of a communication processor according to an example embodiment. FIG. 8 is a diagram for describing the operating method of a communication processor according to an example embodiment.

Referring to FIGS. 2, 4, 6, 7, and 8, the controller 210 performs a first interference detection operation based on channel state information CSI or interference estimation data IEd (S100).

The controller 210 may receive the channel state information CSI from the signal processing circuitry 220, and further, the controller 210 may receive the interference estimation data IEd from the processor 300.

The controller 210 may primarily detect interference based on the received channel state information CSI or interference estimation data IEd.

According to an example embodiment, the channel state information CSI may include RSRP information for a CSI-RS signal and CSI-IM information measured from a resource element allocated to CSI-IM. The RSRP information may include individual RSRP information distinguished according to a serving base station 20 (FIG. 1) and a neighboring base station 30 (FIG. 1).

The interference estimation data IEd may include location data Ld, interference data Id, etc. According to an example embodiment, the location data Ld may be acquired in a GNSS mode. Here, GNSS is one example expression, and may be used interchangeably with at least one of GPS, Global Navigation Satellite System (Glonass), Beidou Navigation Satellite System (hereinafter, referred to as Beidou) or Galileo, and the European global satellite-based navigation system, according to a use area or a bandwidth.

The interference data Id may be data generated in an application program or an application layer executed in the processor 300. According to an example embodiment, the interference data Id may be data indicating whether direct interference occurs detected by the user equipment 10.

According to an example embodiment, the controller 210 may determine that the interference is not detected when Equation 3 below is satisfied.

(Equation 3)

$$RSRP_s - RSRP_N > \delta_{th}$$

Here, RSRPs represents a mean received signal power value for the CSI-RS signal received from the serving base station, $RSRP_N$ represents a mean received signal power value for the CSI-RS signal received from the neighboring base station, and $\delta_{th}$ represents a predetermined constant.

According to an example embodiment, the controller 210 may determine that the interference is not detected when Equation 4 below is satisfied.

(Equation 4)

$$CSI_{IM} < \gamma_{th}$$

Here, $CSI_{IM}$ $CSI_{IM}$ represents a power value of a received signal in a resource element allocated to the CSI-IM, and $\gamma th$ represents a predetermined constant.

According to an example embodiment, the controller 210 may determine that the interference is detected when Equation 5 below is satisfied.

(Equation 5)

$$|RSRP_s - RSRP_N| < \delta_{th}$$

Here, RSRPs represents a mean received signal power value for the CSI-RS signal received from the serving base station, $RSRP_N$ represents a mean received signal power value for the CSI-RS signal received from the neighboring base station, and $\delta_{th}$ represents a predetermined constant.

According to an example embodiment, the controller 210 may determine that the interference is detected when Equation 6 below is satisfied.

(Equation 6)

$$CSI_{IM} > \gamma_{th}$$

Here, $CSI_{IM}$ represents a power value of a received signal in a resource element allocated to the CSI-IM, and $\gamma_{th}$ represents a predetermined constant.

According to an example embodiment, the controller 210 may primarily detect the interference based on the location data Ld and the interference data Id.

The controller 210 checks whether the interference is detected, and selects an operation of the anomaly detection module 231 (S200).

When the controller 210 determines that the interference is not detected (S200, NO), the controller 210 may provide a control signal or a command to perform the training operation to the anomaly detection module 231. When the controller 210 determines that the interference is detected (S200, YES), the controller 210 may provide a control signal or a command to perform the classify operation to the anomaly detection module 231.

The anomaly detection module 231 performs the training operation in response to non-detection of the interference by controller 210 (S300).

The anomaly detection module 231 may receive at least one DMRS signal received at the same symbol interval as one sample, and train the sample.

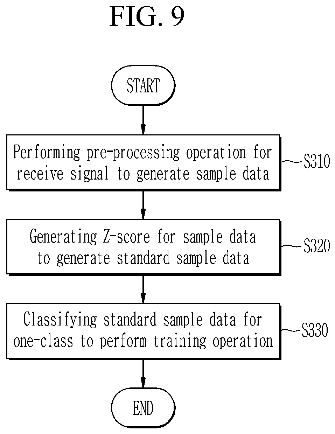

The anomaly detection module 231 may classify a plurality of samples for one class in the training operation. The training operation of the anomaly detection module 231 will be described later in FIGS. 9 to 13.

The anomaly detection module 231 performs a second interference detection operation by performing the classify operation in response to the detection of the interference by controller 210 (S400).

The anomaly detection module 231 may receive at least one DMRS signal received at the same symbol interval as one sample, and classify the received sample based on the pretrained one-class classification training engine 2313.

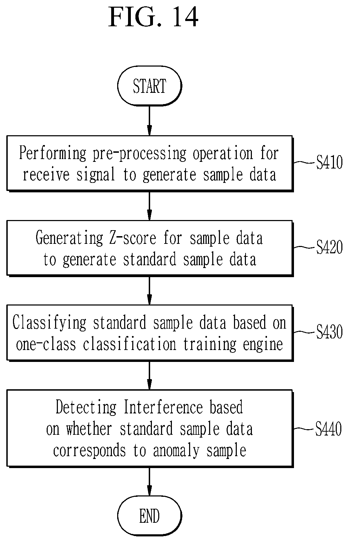

The anomaly detection module 231 may classify the sample into the normal or the anomaly based on the pretrained one-class classification training engine 2313. The classify operation of the anomaly detection module 231 will be described later in FIGS. 14 to 17.

The anomaly detection module 231 checks whether the anomaly is detected for the sample to check the detection of the interference (S500).

When the anomaly detection module 231 checks that the sample is normal, the anomaly detection module 231 checks the non-detection of the interference (S500, NO). When the anomaly detection module 231 checks that the sample is an anomaly, the anomaly detection module 231 checks the detection of the interference (S500, YES).

When the anomaly detection module 231 checks the detection of the interference, the anomaly detection module 231 provides the interference whitening enable data IW_EN to the signal processing circuitry 220 (S600).

According to an example embodiment, the anomaly detection module 231 may provide the interference whitening enable data IW_EN to the signal processing circuitry 220 through the controller 210.

The signal processing circuitry 220 performs an interference whitening operation in response to receiving the interference whitening enable data IW_EN (S700).

According to an example embodiment, the interference whitening processing unit 2274 may generate a whitening receive signal yw and a whitening channel matrix Hw by performing the interference whitening operation in response to receiving the interference whitening enable data IW_EN.

According to an example embodiment, when the interference whitening processing unit 2274 does not receive the interference whitening enable data IW_EN, the interference whitening processing unit 2274 may output the provided channel matrix H as it is.

The communication processor 200 adaptively turns on or turns off the interference whitening operation of the signal processing circuitry 220 by detecting the effective interference situation through the interference detection operation of the controller 210 and the anomaly detection module 231 to improve the performance of the communication operation.

The communication processor 200 may selectively perform the training operation even during the use of the user equipment 10, thereby improving the optimization operation of the one-class classification training engine 2313 and improving the communication performance. In the improved optimization operation, the one-class classification training engine 2313 sensitively detects the effective interference situation to improve the performance of the communication operation of the communication processor 200.

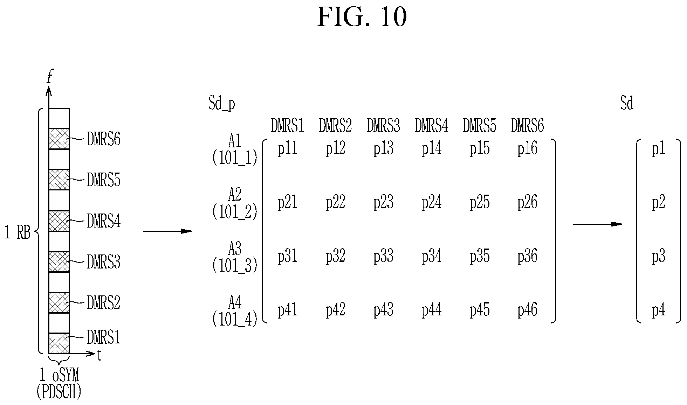

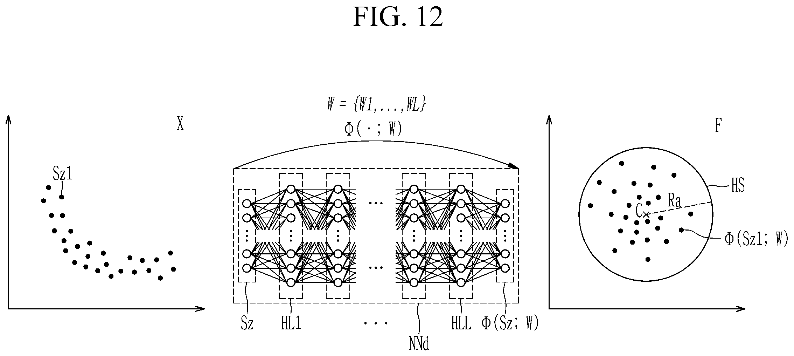

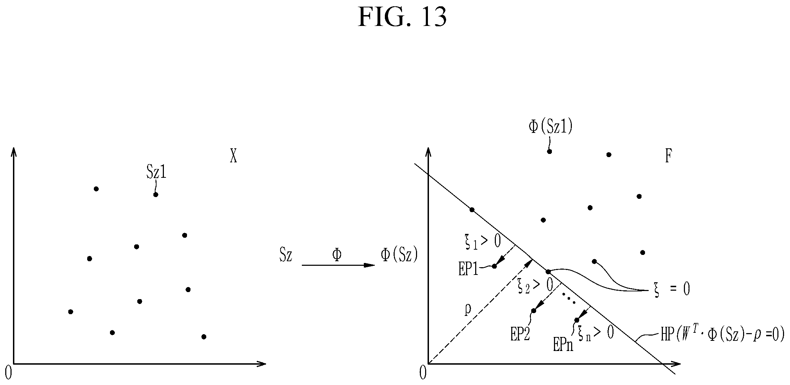

FIG. 9 is a flowchart illustrating an operating method of a communication processor according to an example embodiment. FIGS. 10 to 13 are diagrams for describing the operating method of a communication processor according to an example embodiment. Specifically, FIG. 9 is a flowchart embodying step S300 of FIG. 7. Specifically, FIG. 12 is a diagram for describing the training operation of the one-class classification training engine 2313 performed based on Deep SVDD, and FIG. 13 is a diagram for describing the training operation of the one-class classification training engine 2313 performed based on OC-SVM.

Referring to FIGS. 6 and 9, the pre-processing unit 2311 performs a pre-processing operation for the receive signal y to generate the sample data Sd (S310).

Additionally referring to FIG. 10, the pre-processing unit 2311 may perform the pre-processing operation for at least one DMRS signal DMRS1 to DMRS6 received as an index of the same OFDM symbol oSYM within the physical downlink control channel PDCCH among the receive signals y. At least one DMRS signal DMRS1 to DMRS6 may be mapped to resource elements located at indexes of different subcarriers, respectively, and received.

In the LTE system, at least one DMRS signal DMRS1 to DMRS6 received as the index of the same OFDM symbol oSYM in a resource block RB may be pre-processed as one sample. In the NR system, at least one DMRS signal DMRS1 to DMRS6 in the resource block RB may be pre-processed as one sample.

According to an example embodiment, the pre-processing unit 2311 concatenates power data for at least one DMRS signal DMRS1 to DMRS6 received for each antenna to generate pre-sample data Sd_p before generating the sample data Sd.

When FIG. 10 is exemplarily described, the pre-processing unit 2311 concatenates power data for at least one DMRS signal DMRS1 to DMRS6 received from the plurality of antennas 101_1 to 101_4 to generate the pre-sample data Sd_p. The pre-sample data Sd_p may be a 4 x 6 matrix, and the pre-sample data Sd_p may include 1_1st to 4_6th power data p11 to p46.

For example, the 1_1st power data p11 may correspond to power measured based on a first DMRS signal DMRS1 received from a first antenna 101_1, and the 4_6th power data p46 may correspond to power measured based on a sixth DMRS signal DMRS6 received from a fourth antenna 101_4.

According to an example embodiment, the pre-processing unit 2311 may generate the sample data Sd based on elements of the pre-sample data Sd_p. The sample data Sd may be a 4 x 1 matrix, and may include first to fourth power data p1 to p4.

For example, the pre-processing unit 2311 may generate the first power data p1 based on 1_1s1 to 1_6th power data p11 to p16, and the pre-processing unit 2311 may generate the fourth power data p4 based on 4_1st to 4_6th power data p41 to p46.

According to an example embodiment, the sample data Sd may have the same dimension as the input layer of the one-class classification training engine 2313.

In FIG. 10, the sample data Sd is illustrated as including only the power data as the element, but according to an example embodiment, the sample data Sd may include the angle of arrival, the angle of departure, the Doppler element, the phase noise, etc.

The Z-score generator 2312 generates a Z-score of the sample data Sd based on the plurality of sample data Sd to generate the standard sample data Sz (S320).

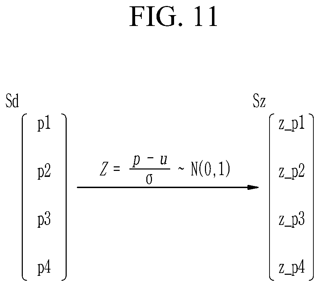

Additionally referring to FIG. 11, the Z-score generator 2312 generates the Z-score for each element of the sample data Sd based on the plurality of sample data Sd to generate the standard sample data Sz. The Z-score generator 2312 generates the Z-score of each element to generate the standard sample data Sz, as in Equation 7 below.

(Equation 7)

$$Z = \frac{p - u}{\sigma}$$

Here, $z$ represents the Z-score, $p$ represents one element of the sample data, $u$ represents a mean of $p$, and $\sigma$ represents a standard deviation of $p$.

According to an example embodiment, the Z-score generator 2312 may generate the standard sample data Sz which is subject to standard normal distribution in which the mean of each element is 0 and the standard deviation is 1. According to an example embodiment, the dimension of the sample data Sd may be same as the dimension of the standard sample data Sz.

When FIG. 11 is exemplarily described, the Z-score generator 2312 generates first to fourth standard power data z_p1 to z_p4 based on the first to fourth power data p1 to p4 of the sample data Sd to generate the standard sample data Sz.

The Z-score generator 2312 generates the standard sample data Sz indicating a relative location of each element other than an absolute size of each element in the sample data Sd to improve the efficiencies of the training operation and the interference detection of the anomaly detection module 231.

The one-class classification training engine 2313 performs the training operation by classifying the standard sample data Sz for one class (S330).

According to an example embodiment, the one-class classification training engine 2313 may perform an unsupervised training operation of classifying the standard sample data Sz for one class based on one of Deep SVDD, OC-SVM, and KNN.

When FIG. 12 is exemplarily described, the one-class classification training engine 2313 may classify the standard sample data Sz for one class based on Deep SVDD. According to an example embodiment, Deep SVDD is an unsupervised learning neural network model which surrounds normal data and finds a boundary of a smallest hypersphere based on a convolutional neural network.

The one-class classification training engine 2313 may transform the standard sample data Sz by mapping the standard sample data Sz from an input space X to a feature space F based on a mapping function Φ based on a transformation neural network NNd. For example, the one-class classification training engine 2313 may transform first standard sample data Sz1 of the input space X into first transformed standard sample data Φ(Sz1; W) of the feature space F. According to an example embodiment, the transformation neural network NNd may be the convolutional neural network, but is not limited thereto.

The one-class classification training engine 2313 may transform the standard sample data Sz to low dimension of data based on the mapping function Φ. According to an example embodiment, the dimension of the standard sample data Sz may be larger than the dimension of the transformed standard sample data Φ(Sz; W).

The transformation neural network NNd may be determined by a weight matrix set W. The transformation neural network NNd may include first to Lth hidden layers HL1 to HLL, and the weight matrix set W may include first to Lth weight matrixes W1 to WL.

According to an example embodiment, the first to Lth hidden layers HL1 to HLL may include the first to Lth weight matrixes W1 to WL, respectively.

The one-class classification training engine 2313 may generate a hypersphere HS which classifies the transformed standard sample data Φ(Sz; W) for one class in the training operation. According to an example embodiment, the hypersphere HS may surround the transformed standard sample data Φ(Sz; W) transformed in the training operation. The hypersphere HS may be a sphere form in which a size of a radius at a center C is Ra.

The one-class classification training engine 2313 may be optimized while reducing the radial size of the hypersphere HS in the training operation. The one-class classification training engine 2313 may optimize the hypersphere HS by finding a weight matrix set W that minimizes a loss function of Equation 8 below in the training operation.

(Equation 8)

$$L(W) = \frac{1}{n}\sum_{i=1}^{n}\left\| \Phi(Szi;W) \right\|^2 + \frac{\lambda}{2}\sum_{l=0}^{L}\left\| W^l \right\|^2$$

Here, $L$ represents a loss function for the transformation neural network, $\Phi$ represents the mapping function based on the transformation neural network, $Szi$ represents i-th standard sample data, $W$ represents the weight matrix set for the transformation neural network, $W$ represents a weight matrix of a first hidden layer of the transformation neural network, and $\lambda$ represents a predetermined coefficient, and is larger than 0.

As a different example from FIG. 12, based on FIG. 13, the one-class classification training engine 2313 may classify the standard sample data Sz for one class based on OC-SVM. According to an example embodiment, OC-SVM is an unsupervised learning algorithm which classifies normal data for one class, and finds a boundary of the hyperplane farthest from the origin, based on a kernel.

The one-class classification training engine 2313 may transform the standard sample data Sz by mapping the standard sample data Sz from the input space X to the feature space F based on the mapping function $\Phi$ based on a kernel. For example, the one-class classification training engine 2313 may transform first input standard sample data Sz1 of the input space X into first transformed standard sample data $\Phi$(Sz1) of the feature space F.

The one-class classification training engine 2313 may transform the standard sample data Sz to high dimension of data based on the mapping function $\Phi$. According to an example embodiment, the dimension of the transformed standard sample data $\Phi$(Sz) may be larger than the dimension of the standard sample data Sz.

The one-class classification training engine 2313 may generate a hyperplane HP which classifies the transformed standard sample data $\Phi$(Sz; W) for one class in the training operation. The hyperplane HP may be defined by Equation 9 below.

(Equation 9)

$$w^{T} \cdot \Phi(Szi) - \rho = 0$$

Here, $w^T$ represents a normal vector of the hyperplane, $\Phi$ represents a mapping function based on OC-SVM, Szi represents the i-th standard sample data, and $\rho$ represents a distance between the origin and the hyperplane.

The transformed standard sample data $\Phi$(Sz) transformed in the training operation may satisfy Equation 10 below.

(Equation 10)

$$w^{T} \cdot \Phi(Szi) \geq \rho - \xi, \qquad \xi > 0$$

Here, $w^T$ represents the normal vector of the hyperplane, $\Phi$ represents the mapping function based on OC-SVM, $S_{zi}$ represents the i-th standard sample data, $\rho$ represents the distance between the origin and the hyperplane, and $\xi$ represents a slack variable for an error point.

In general, the transformed standard sample data $\Phi$(Sz) may be on the hyperplane HP or may be transformed to a location farther than the hyperplane HP based on the origin O in the feature space F. In this case, the slack variable may be 0. However, some of the transformed standard sample data $\Phi$(Sz) as error points EP1 to EPn may be transformed to a location closer than the hyperplane HP based on the origin O in the feature space F. In this case, the slack variable may be a distance between the error points EP1 to EPn and the hyperplane HP, and may be larger than 0.

The one-class classification training engine 2313 may be optimized while increasing the distance between the hyperplane HP and the origin O in the training operation. The one-class classification training engine 2313 may optimize the hyperplane HP by finding a normal vector for minimizing a loss function, a slack variable, and a distance between the origin and the hyperplane in Equation 11 below with respect to the transformed standard sample data $\Phi$(Sz) in the training operation.

(Equation 11)

$$L(w, \xi, \rho) = \frac{1}{2}\|w\|^2 + \frac{1}{vn}\sum_{i=1}^{n}\xi_i - \rho$$

Here, $L$ represents the loss function for the hyperplane, $w$ represents a vertical vector of the normal vector of the hyperplane, $\Phi$ represents the mapping function based on OC-SVM, $\rho$ represents the distance between the origin and the hyperplane, $\xi i$ represents a slack variable for an i-th error point, $n$ represents the number of error points, and $v$ represents a predefined constant, and is larger than 0 and smaller than 1.

Unlike the example embodiments of FIGS. 12 and 13, the one-class classification training engine 2313 according to an example embodiment may not perform a separate mapping operation and a separate optimization operation during a training process. According to an example embodiment, the one-class classification training engine 2313 may perform the training operation by accumulating the standard sample data Sz. According to an example embodiment, the one-class classification training engine 2313 may perform the training operation based on the KNN and the standard sample data Sz.

In general, the one-class classification training engine 2313 may train the standard sample data Sz by classifying the standard sample data Sz for one class based on a one-class KNN. According to an example embodiment, the one-class classification training engine 2313 may classify the standard sample data Sz for one class as the normal sample.

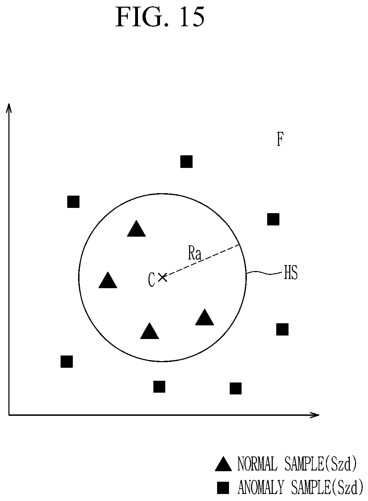

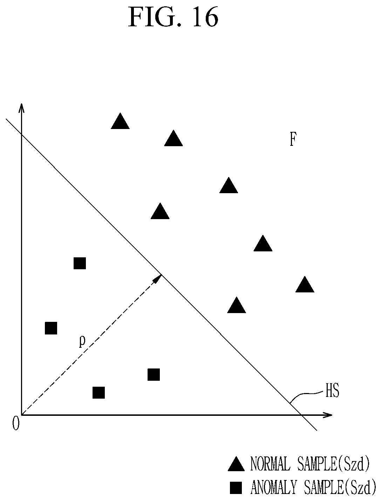

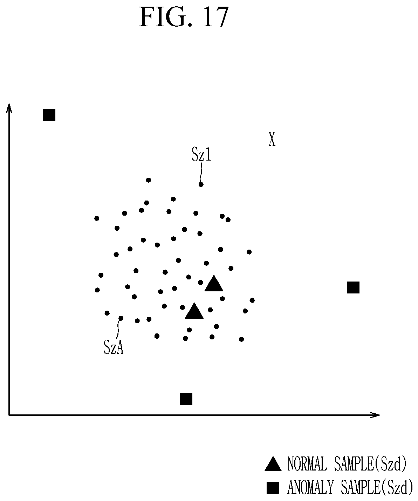

FIG. 14 is a flowchart illustrating an operating method of a communication processor according to an example embodiment. FIGS. 15 to 17 are diagrams for describing the operating method of a communication processor according to an example embodiment. Specifically, FIG. 14 is a flowchart of embodying step S400 of FIG. 7. Specifically, FIG. 15 is a diagram for describing the classify operation of the one-class classification training engine 2313 performed based on Deep SVDD, FIG. 16 is a diagram for describing the classify operation of the one-class classification training engine 2313 performed based on OC-SVM, and FIG. 17 is a diagram for describing the classify operation of the one-class classification training engine 2313 performed based on KNN.

Referring to FIGS. 6 and 14, the pre-processing unit 2311 performs the pre-processing operation for the receive signal y to generate the sample data Sd (S410).

Step S410 may correspond to step S310 of FIG. 9, and the description of S410 may be replaced with the description of step S310 of FIG. 9.

The Z-score generator 2312 generates the Z-score of the sample data Sd based on the plurality of sample data Sd to generate the standard sample data Sz (S420).

Step S420 may correspond to step S320 of FIG. 9, and the description of S420 may be replaced with the description of step S320 of FIG. 9.

The one-class classification training engine 2313 performs the classify operation for the standard sample data Sz based on a pretrained neural network or algorithm (S430).

When FIGS. 12 and 15 are described as an example, the one-class classification training engine 2313 may classify target standard sample data Szd into normal or anomaly based on a pretrained transformation neural network NNd of Deep SVDD in the classify operation.

The one-class classification training engine 2313 may transform the target standard sample data Szd by mapping the target standard sample data Szd from the input space X to the feature space F based on a mapping function $\Phi$ based on the pretrained transformation neural network NNd.

The one-class classification training engine 2313 may classify the target standard sample data Szd in the classify operation based on the hypersphere HS generated in the training operation. When the standard sample data transformed in the classify operation is located outside the hypersphere HS, the one-class classification training engine 2313 may classify the target standard sample data Szd into anomaly. When the standard sample data transformed in the classify operation is included in the hypersphere HS, the one-class classification training engine 2313 may classify the target standard sample data Szd into normal.

When Equation 12 below is satisfied in the feature space F, the one-class classification training engine 2313 may classify the target standard sample data Szd into anomaly in the classify operation. When Equation 12 below is not satisfied, the one-class classification training engine 2313 may classify the target standard sample data Szd into normal.

(Equation 12)

$$\|\Phi(Szd; W) - C\|^2 > Ra^2$$

Here, $\Phi$ represents the mapping function based on the transformation neural network, *Szd* represents the target standard sample data, *W* represents a weight matrix set for the transformation neural network, *C* represents the center of the hypersphere HS, and *Ra* represents a radius of the hypersphere HS.

When FIGS. 13 and 16 are described as a different example from FIGS. 12 and 15, the one-class classification training engine 2313 may classify the standard sample data Sz into normal or anomaly based on a hyperplane HP of pretrained OC-SVM in the classify operation.

The one-class classification training engine 2313 may transform the target standard sample data Szd by mapping the target standard sample data Szd from the input space X to the feature space F based on the mapping function $\Phi$ based on a kernel function.

The one-class classification training engine 2313 may classify the target standard sample data Szd in the classify operation based on the hyperplane HP generated in the training operation. When the standard sample data transformed in the classify operation is located between the origin O and the hyperplane HP, the one-class classification training engine 2313 may classify the target standard sample data Szd into anomaly. When the standard sample data transformed in the classify operation is located farther than the hyperplane HP based on the origin O, the one-class classification training engine 2313 may classify the target standard sample data Szd into normal.

When Equation 13 below is satisfied in the feature space F, the one-class classification training engine 2313 may classify the target standard sample data Szd into anomaly in the classify operation. When Equation 13 below is not satisfied, the one-class classification training engine 2313 may classify the target standard sample data Szd into normal.

$$(\text{Equation } 13)$$

$$w^T \cdot \Phi\left(Szd\right) < \rho$$

Here, $w^T$ represents the normal vector of the hyperplane, $\Phi$ represents the mapping function based on OC-SVM, *Szi* represents the target standard sample data, and $\rho$ represents the distance between the origin and the hyperplane.

When FIG. 17 is described as an example, the algorithm of the KNN of the one-class classification training engine 2313 may perform the training operation based on first to Ath standard sample data Sz1 to SzA accumulated in the input space X before the classify operation. The one-class classification training engine 2313 may classify the target standard sample data Szd into normal or anomaly based on the pretrained algorithm of the KNN in the classify operation.

The one-class classification training engine 2313 may classify the target standard sample data Szd by comparing distances from K standard sample data closest to the target standard sample data Szd, and a reference value.

When Equation 14 below is satisfied, the one-class classification training engine 2313 may classify the target standard sample data Szd into anomaly in the classify operation. When Equation 14 below is not satisfied, the one-class classification training engine 2313 may classify the target standard sample data Szd into normal in the classify operation.

$$(\text{Equation } 14)$$

$$\frac{1}{k}\sum_{j=1}^{k}\left\|Szd - z_j(Szd)\right\| > \delta_{th}$$

Here, *Szd Szi* represents the target standard sample data, $z_j(Szd)$ $z_j(Szd)$ represents j-th closest standard sample data to the target standard sample data, and $\delta_{th}$ represents a predetermined constant.

According to an example embodiment, the one-class classification training engine 2313 may classify the target standard sample data based on a sum of a maximum value among a distance from neighboring data or vectors with neighboring data in addition to classifying the target standard sample data based on a mean value of distances from neighboring data as in Equation 14 above.

The one-class classification training engine 2313 detects the interference in response to the target standard sample data Szd corresponding to anomaly (S440).

According to an example embodiment, the anomaly detection module 231 may provide the interference whitening enable data IW_EN to the interference whitening unit 227 in response to detecting the interference from the target standard sample data Szd.

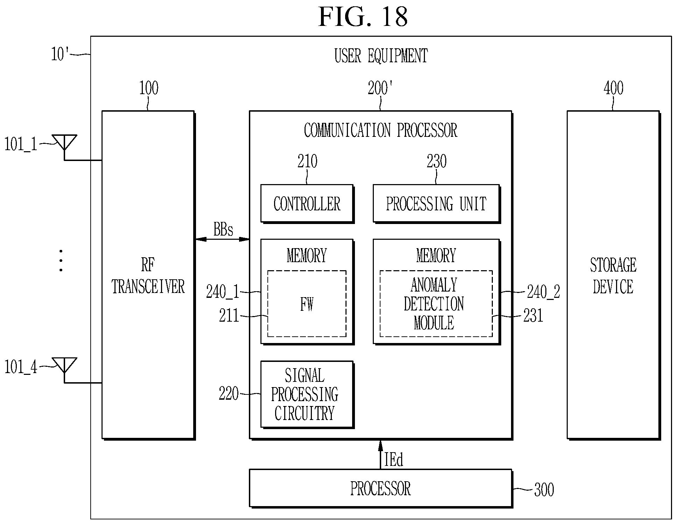

FIG. 18 is a block diagram illustrating a user equipment according to an example embodiment. A user equipment 10' and a communication processor 200' of FIG. 18 may correspond to the user equipment 10 and the communication processor 200 of FIG. 2, respectively. Hereinafter, for convenience of description, the user equipment 10' and the communication processor 200' will be described based on differences from the user equipment 10 and the communication processor 200 of FIG. 2.

Referring to FIG. 18, the communication processor 200' may include a first memory 240_1 and a second memory 240_2 disposed to be separated from each other.

The controller 210 may control an overall operation of the communication processor 200' for communication with a base station, and access the first memory 240_1 and execute a loaded firmware 211 or operating system. According to an example embodiment, the first memory 240_1 as a working memory for the controller 210 may store a control instruction code and data according to an operation of the firmware 211.

The processing unit 230 accesses the second memory 240_2 to execute the loaded anomaly detection module 231.

According to an example embodiment, the second memory 240_2 as a working memory for the processing unit 230 may store a control instruction code and data according to an operation of the anomaly detection module 231.

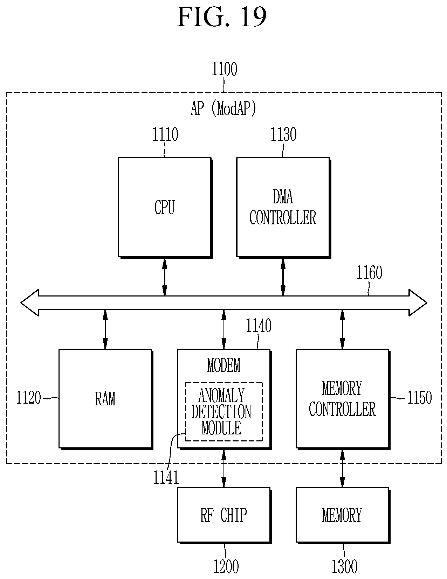

FIG. 19 is a block diagram illustrating an application processor according to an example embodiment.

Referring to FIG. 19, the application processor 1100 may be referred to as ModAP as a function of a modem is incorporated thereinto.

The application processor 1100 may be implemented as a system on chip (SoC), and may include a CPU 1110, a RAM 1120, a DMA controller 1130, a modem 1140, and a memory controller 1150. Besides, the application processor 11000 may further include other components, for example, a power management unit, a display controller, a sensor, etc. The components of the system on chip (SoC) may transmit and receive data through a bus 1160.

The CPU 1110 may control an operation of the application processor 1100 overall. The CPU 1110 processes or executes a program and/or data stored in the RAM 1120 (or ROM) to control operations of the components of the application processor 1100. In an example embodiment, the CPU 1110 may be implemented with a multi-core. The multi-core is one computing component having two or more independent cores.

The RAM 1120 may temporarily store programs (e.g., an operation system and application programs), data, or instructions. For example, the programs and/or data stored in the memory 1300 may be temporarily stored in the RAM 1120 according to a control or booting code of the CPU 1110. The RAM 1120 may be implemented as the DRAM or SRAM.

The DMA controller 1130 may support data transmission between components of the application processor 1100, and control the data transmission to be made directly between the components without intervention of the CPU 1110.

The modem 1140 may modulate data to be transmitted to be suitable for a wireless environment, and reconstruct received data, for wireless communication. The modem 1140 may include the anomaly detection module 1141. The modem 1140 may correspond to the communication processors 200 and 200' in FIGS. 1 to 18, and the anomaly detection module 1141 may correspond to the anomaly detection module 231 in FIGS. 1 to 18.

The anomaly detection module 1141 detects an effective interference situation such as a situation in which the interference is superior to the noise as a data transmission unit, and adaptively turns on or turns off the interference whitening operation to improve the performance of the communication operation. The modem 1140 may perform digital communication with an RF chip 1200.

The RF chip 1200 may transform an RF signal which is a high-frequency signal received through the antenna into a baseband signal which is a low-frequency signal, and transmit the transformed baseband signal to the modem 1140. Further, the RF chip 1200 may transform the baseband signal received from the modem 1140 into the high-frequency signal, and transmit the RF signal to a wireless network through the antenna. Further, the RF chip 1200 may amplify or filter a signal.

Besides, the operations of the modem 1140 and the anomaly detection module 1141 may be the same as or similar to the operations of the communication processors 200 and 200', and the anomaly detection module 231 in FIGS. 1 to 18. Accordingly, a duplicated description will be omitted.

As described above, the application processor 1100 according to an example embodiment of the present disclosure may include some components for performing the communication function, e.g., the modem 1140 including the anomaly detection module 1141.

While the example embodiments of the present disclosure have been described above in detail, it is to be understood that the scope of the present disclosure is not limited to the disclosed example embodiments, but, on the contrary, is intended to cover various modifications and equivalent arrangements included within the scope of the appended claims.


**ANNEX A**

The present invention can also be defined by reference to the following clauses:

Clause 1. A communication processor comprising:

a signal processing circuitry configured to perform an interference whitening operation for a receive signal, and perform a symbol detection operation and a channel decoding operation for the receive signal to output bit data;
a controller configured to control the signal processing circuitry, and receive channel state information for the receive signal or interference estimation data input from an outside; and
an anomaly detection module configured to perform an interference detection operation based on the receive signal to determine whether to perform the interference whitening operation.

Clause 2. The communication processor of clause 1, further comprising:

a processing unit,
wherein the anomaly detection module is configured to be executed by the processing unit.

Clause 3. The communication processor of clause 2, wherein:

the signal processing circuitry includes an interference whitening unit configured to perform the interference whitening operation for the receive signal and a channel matrix estimated based on the receive signal,
the controller is configured to perform a first interference detection operation based on the channel state information and the interference estimation data, and
the anomaly detection module is configured to perform the interference detection operation in response to a result of the first interference detection operation, and provide interference whitening enable data for the interference whitening operation to the controller based on the interference detection operation.

Clause 4. The communication processor of any of clauses 1 to 3, wherein:

the controller is configured to perform a first interference detection operation based on the channel state information and the interference estimation data, and
the channel state information includes received signal received power (RSRP) information and channel state information-interference measurement (CSI-IM) information.

Clause 5. The communication processor of clause 4,

wherein the controller is configured to determine interference detection in the first interference detection operation when the following equation is satisfied:

[Equation]

$$\left| RSRP_s \text{-} RSRP_N \right| < \delta_{th}, \ or \ \ CSI_{IM} > \gamma_{th}$$

where RSRPs represents a mean received signal power value for a CSI-RS signal received from a serving base station, $RSRP_N$ represents a mean received signal power value for the CSI-RS signal received from a neighboring base station, the $CSI_{IM}$ represents a power value of a receive signal in a resource element allocated to the CSI-IM, and the $\delta_{th}$ and the $\gamma_{th}$ represent predetermined constants, and
wherein the anomaly detection module is configured to perform the inference detection operation in response to the interference detection in the first interference detection operation.

Clause 6. The communication processor of clause 4 or clause 5,

wherein the controller is configured to determine interference non-detection in the first interference detection operation when the following equation is satisfied:

[Equation]

$$RSRP_s - RSRP_N > \delta_{th} \ or \ CSI_{IM} < \gamma_{th}$$

where the $RSRPs$ represents a mean received signal power value for a CSI-RS signal received from a serving base station, the $RSRP_N$ represents a mean received signal power value for the CSI-RS signal received from a neighboring base station, the $CSI_{IM}$ represents a power value of the receive signal in a resource element allocated to the CSI-IM, and the $\delta_{th}$ and the $\gamma th$ represent predetermined constants, and
wherein the anomaly detection module is configured to perform a training operation based on the receive signal in response to the interference non-detection in the first interference detection operation.

Clause 7. The communication processor of any of clauses 1 to 6, wherein:
the anomaly detection module is configured to perform the interference detection operation based on at least one DMRS signal included in the receive signal and input at the same symbol interval.

Clause 8. The communication processor of any of clauses 1 to 7, wherein:
the anomaly detection module further includes a pre-processing unit configured to pre-process the receive signal to generate sample data, a Z-score generator configured to generate a Z-score for the sample data to generate standard sample data, and a classification training engine configured to perform the interference detection operation for the standard sample data in response to the channel state information or the interference estimation data.

Clause 9. The communication processor of clause 8, wherein:
the pre-processing unit is configured to generate the sample data based on at least one DMRS signal included in the receive signal and input at the same symbol interval.

Clause 10. The communication processor of clause 8 or clause 9, wherein:

the classification training engine is configured to be trained by a one-class classification mode before the interference detection operation, and is configured to classify the standard sample data into normal or anomaly in the inference detection operation, and
the signal processing circuitry is configured to perform the interference whitening operation in response to classifying the standard sample data into the anomaly in the interference detection operation.

Clause 11. The communication processor of clause 10, wherein:
the interference detection operation is performed based on at least one of Deep SVDD, OC-SVM, and KNN.

Clause 12. The communication processor of any of clauses 1 to 11,

wherein the controller is configured to perform a first interference detection operation based on channel state information for a receive signal or interference estimation data input from an outside, wherein the interference detection operation performed by the anomaly detection operation is a second interference detection operation,
wherein the anomaly detection module is configured to perform the second interference detection operation by:

performing pre-processing on the receive signal to generate sample data, in response to a result of the first interference detection operation;
generating a Z-score for the sample data to generate standard sample data;
classifying the standard sample data based on a classification training engine; and
determining whether to perform an interference whitening operation for the receive signal, in response to a result of the classifying.

Clause 13. The communication processor of clause 12, wherein:
the anomaly detection module is configured to generate the sample data in response to interference detection in the first interference detection operation.

Clause 14. The communication processor of clause 12 or clause 13, wherein:

the classification training engine is configured to be trained in a one-class classification mode before the classifying, and
the classifying includes classifying the standard sample data into normal or anomaly based on the classification training engine.

Clause 15. The communication processor of clause 14, wherein:
the signal processing circuitry is configured to perform the interference whitening operation in response to classifying the standard sample data into the anomaly in the classifying.

Clause 16. An operating method of a communication processor, the operating method comprising:

performing by signal processing circuitry, an interference whitening operation for a receive signal, and performing a symbol detection operation and a channel decoding operation for the receive signal to output bit data;
controlling, by a controller, the signal processing circuitry;
receiving channel state information for the receive signal or interference estimation data input from an outside; and
performing an interference detection operation based on the receive signal to determine whether to perform the interference whitening operation.

**Claims**

1. A communication processor (200) comprising:

a signal processing circuitry (220) configured to perform an interference whitening operation for a receive signal, and perform a symbol detection operation and a channel decoding operation for the receive signal to output bit data;
a controller (210) configured to control the signal processing circuitry, and receive channel state information for the receive signal or interference estimation data input from an outside; and
an anomaly detection module (231) configured to perform an interference detection operation based on the receive signal to determine whether to perform the interference whitening operation.

2. The communication processor (200) of claim 1, further comprising:

a processing unit (300),
wherein the anomaly detection module (231) is configured to be executed by the processing unit (230).

3. The communication processor (200) of claim 2, wherein:

the signal processing circuitry (220) includes an interference whitening unit (227) configured to perform the interference whitening operation for the receive signal and a channel matrix estimated based on the receive signal,
the controller (210) is configured to perform a first interference detection operation based on the channel state information and the interference estimation data, and
the anomaly detection module (231) is configured to perform the interference detection operation in response to a result of the first interference detection operation, and provide interference whitening enable data for the interference whitening operation to the controller based on the interference detection operation.

4. The communication processor (200) of any preceding claim, wherein:

the controller (210) is configured to perform a first interference detection operation based on the channel state information and the interference estimation data, and
the channel state information includes received signal received power (RSRP) information and channel state information-interference measurement (CSI-IM) information.

5. The communication processor (200) of claim 4,

wherein the controller (210) is configured to determine interference detection in the first interference detection operation when the following equation is satisfied:

[Equation]

$$\left| RSRP_s - RSRP_N \right| < \delta_{th}, \text{ or } CSI_{IM} > \gamma_{th}$$

where RSRPs represents a mean received signal power value for a CSI-RS signal received from a serving base station, $RSRP_N$ represents a mean received signal power value for the CSI-RS signal received from a neighboring base station, the $CSI_{IM}$ represents a power value of a receive signal in a resource element allocated to the CSI-IM, and the $\delta_{th}$ and the $\gamma th$ represent predetermined constants, and
wherein the anomaly detection module (231) is configured to perform the inference detection operation in response to the interference detection in the first interference detection operation.

6. The communication processor (200) of claim 4 or claim 5,

wherein the controller (210) is configured to determine interference non-detection in the first interference detection operation when the following equation is satisfied:

[Equation]

$$RSRP_s - RSRP_N > \delta_{th} \; or \; CSI_{IM} < \gamma_{th}$$

where the RSRPs represents a mean received signal power value for a CSI-RS signal received from a serving base station, the $RSRP_N$ represents a mean received signal power value for the CSI-RS signal received from a neighboring base station, the $CSI_{IM}$ represents a power value of the receive signal in a resource element allocated to the CSI-IM, and the $\delta_{th}$ and the $\gamma th$ represent predetermined constants, and
wherein the anomaly detection module (231) is configured to perform a training operation based on the receive signal in response to the interference non-detection in the first interference detection operation.

7. The communication processor (200) of any preceding claim, wherein:
the anomaly detection module (231) is configured to perform the interference detection operation based on at least one DMRS signal included in the receive signal and input at the same symbol interval.

8. The communication processor (200) of any preceding claim, wherein:
the anomaly detection module (231) further includes a pre-processing unit (2311) configured to pre-process the receive signal to generate sample data, a Z-score generator (2312) configured to generate a Z-score for the sample data to generate standard sample data, and a classification training engine (2313) configured to perform the interference detection operation for the standard sample data in response to the channel state information or the interference estimation data.

9. The communication processor (200) of claim 8, wherein:
the pre-processing unit (2311) is configured to generate the sample data based on at least one DMRS signal included in the receive signal and input at the same symbol interval.

10. The communication processor (200) of claim 8 or claim 9, wherein:

the classification training engine (2313) is configured to be trained by a one-class classification mode before the interference detection operation, and is configured to classify the standard sample data into normal or anomaly in the inference detection operation, and
the signal processing circuitry (220) is configured to perform the interference whitening operation in response to classifying the standard sample data into the anomaly in the interference detection operation.

11. The communication processor (200) of claim 10, wherein:
the interference detection operation is performed based on at least one of Deep SVDD, OC-SVM, and KNN.

12. An operating method of a communication processor (200), comprising:

performing (S100) an interference detection operation based on channel state information for a receive signal or interference estimation data input from an outside;
performing (310) pre-processing on the receive signal to generate sample data, in response to a result of the interference detection operation;
generating (320) a Z-score for the sample data to generate standard sample data;
classifying (330) the standard sample data based on a classification training engine; and
determining (S500) whether to perform an interference whitening operation for the receive signal, in response to a result of the classifying.

**13.** The operating method of claim 12, wherein:
the sample data is generated in response to interference detection in the interference detection operation.

**14.** The operating method of claim 12 or claim 13, wherein:

the classification training engine (2313) is configured to be trained in a one-class classification mode before the classifying, and
the classifying includes classifying the standard sample data into normal or anomaly based on the classification training engine (2313).

**15.** The operating method of claim 14, wherein:
the interference whitening operation is performed in response to classifying the standard sample data into the anomaly in the classifying.

# FIG. 1

EP 4 708 706 A1

# FIG. 2

USER EQUIPMENT — 10

100

101_1

101_4

RF TRANSCEIVER — 100

BBs

200 — COMMUNICATION PROCESSOR

210 — CONTROLLER

230 — PROCESSING UNIT

220 — SIGNAL PROCESSING CIRCUITRY

MEMORY

FW

ANOMALY DETECTION MODULE — 240 / 231

211  IEd

PROCESSOR — 300

400 — STORAGE DEVICE

EP 4 708 706 A1

# FIG. 3

EP 4 708 706 A1

FIG. 4

26

# FIG. 5

# FIG. 6

```
              2311                2312        231      2313
                |                  |           |        |

y(DMRS)   ┌──────────────┐  Sd  ┌───────────┐  Sz  ┌──────────────────┐  IW_EN
────────→ │PRE-PROCESSING│ ───→ │  Z-SCORE  │ ───→ │    ONE-CLASS     │ ────→
          │     UNIT     │      │ GENERATOR │      │  CLASSIFICATION  │
          └──────────────┘      └───────────┘      │ TRAINING ENGINE  │
                                                   └──────────────────┘
```

# FIG. 7

START

S100 — Performing 1$^{st}$ interference detection operation based on Channel State Information or Interference estimation data

S200 — Checking interference detection to select operation

YES →

NO ↓

S300 — Performing training operation

S400 — Performing classify operation to perform 2$^{nd}$ interference detection operation

S500 — Checking anomaly detection to check interference detection

YES →

NO ↓

S600 — Generating IW enable data

S700 — Performing IW operation

END

EP 4 708 706 A1

# FIG. 8

# FIG. 9

START

Performing pre-processing operation for
receive signal to generate sample data
— S310

Generating Z-score for sample data
to generate standard sample data
— S320

Classifying standard sample data for
one-class to perform training operation
— S330

END

FIG. 10

EP 4 708 706 A1

FIG. 11

$$Sd \quad \begin{bmatrix} p1 \\ p2 \\ p3 \\ p4 \end{bmatrix} \quad \xrightarrow{\quad Z = \dfrac{p - u}{\sigma} \sim N(0,1) \quad} \quad Sz \quad \begin{bmatrix} z\_p1 \\ z\_p2 \\ z\_p3 \\ z\_p4 \end{bmatrix}$$

# FIG. 12

$W = \{W1, \ldots, WL\}$

$\Phi(\cdot\;;\;W)$

X

Sz1

Sz   HL1   $\cdots$   HLL   $\Phi(Sz;\;W)$

NNd

F

HS

C   Ra

$\Phi(Sz1;\;W)$

EP 4 708 706 A1

EP 4 708 706 A1

## FIG. 13

# FIG. 14

START

↓

Performing pre-processing operation for receive signal to generate sample data —S410

↓

Generating Z-score for sample data to generate standard sample data —S420

↓

Classifying standard sample data based on one-class classification training engine —S430

↓

Detecting Interference based on whether standard sample data corresponds to anomaly sample —S440

↓

END

# FIG. 15

▲ NORMAL SAMPLE(Szd)
■ ANOMALY SAMPLE(Szd)

FIG. 16

▲ NORMAL SAMPLE(Szd)
■ ANOMALY SAMPLE(Szd)

# FIG. 17

NORMAL SAMPLE(Szd)
ANOMALY SAMPLE(Szd)

# FIG. 18

# FIG. 19

1100

AP (ModAP)

1110

CPU

1130

DMA
CONTROLLER

1160

1120 — RAM

MODEM

1140

ANOMALY
DETECTION
MODULE

MEMORY
CONTROLLER — 1150

1141

RF CHIP

MEMORY

1200

1300

Europäisches
Patentamt

European
Patent Office

Office européen
des brevets

# EUROPEAN SEARCH REPORT

**Application Number**

EP 25 19 5796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 226119 B2 (NEC CORP) 8 November 2017 (2017-11-08) * paragraphs [0026] - [0038] * | 1-15 | INV. H04B1/10 H04L25/03 |
| X | US 2022/247506 A1 (PARK KWONYEOL [KR] ET AL) 4 August 2022 (2022-08-04) * paragraphs [0029] - [0030] * | 1-15 | |
| A | US 2011/150154 A1 (CHEN DAYONG [US]) 23 June 2011 (2011-06-23) * paragraphs [0002] - [0010] * | 1-15 | |
| A | US 2023/231749 A1 (LEE JAEHWAN [KR] ET AL) 20 July 2023 (2023-07-20) * paragraphs [0005], [0035] - [0054] * | 1-15 | |
| A | WO 2024/013851 A1 (NTT DOCOMO INC [JP]) 18 January 2024 (2024-01-18) * paragraphs [0005] - [0007], [0198] - [0199] * | 1-15 | |

| | | | TECHNICAL FIELDS SEARCHED (IPC) |
|---|---|---|---|
| | | | H04B H04L |

The present search report has been drawn up for all claims

| Place of search | Date of completion of the search | Examiner |
|---|---|---|
| Munich | 15 January 2026 | Marques, Gabriela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 5796

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | Publication date | Patent family member(s) | | Publication date |
|---|---|---|---|---|---|
| JP 6226119 | B2 | 08-11-2017 | JP | 6226119 B2 | 08-11-2017 |
| | | | JP | 2015032892 A | 16-02-2015 |
| US 2022247506 | A1 | 04-08-2022 | CN | 114844594 A | 02-08-2022 |
| | | | EP | 4036817 A1 | 03-08-2022 |
| | | | KR | 20220111145 A | 09-08-2022 |
| | | | TW | 202236829 A | 16-09-2022 |
| | | | US | 2022247506 A1 | 04-08-2022 |
| US 2011150154 | A1 | 23-06-2011 | EP | 2514155 A2 | 24-10-2012 |
| | | | JP | 5539533 B2 | 02-07-2014 |
| | | | JP | 2013514707 A | 25-04-2013 |
| | | | US | 2011150154 A1 | 23-06-2011 |
| | | | WO | 2011073915 A2 | 23-06-2011 |
| US 2023231749 | A1 | 20-07-2023 | NONE | | |
| WO 2024013851 | A1 | 18-01-2024 | NONE | | |

EPO FORM P0459

For more details about this annex : see Official Journal of the European Patent Office, No. 12/82